Europäisches Patentamt

European Patent Office

Office européen des brevets

(11) Veröffentlichungsnummer: **0 362 643 B1**

## EUROPÄISCHE PATENTSCHRIFT

(45) Veröffentlichungstag der Patentschrift: **27.04.94**

(51) Int. Cl.⁵: **C09D 7/12**, C09D 5/02, C08F 220/18

(21) Anmeldenummer: **89117599.4**

(22) Anmeldetag: **23.09.89**

(54) **Verwendung von Acrylatcopolymerisaten als Additive für wässrige anionische Lacksysteme.**

(30) Priorität: **28.09.88 AT 2389/88**

(43) Veröffentlichungstag der Anmeldung:
**11.04.90 Patentblatt 90/15**

(45) Bekanntmachung des Hinweises auf die Patenterteilung:
**27.04.94 Patentblatt 94/17**

(84) Benannte Vertragsstaaten:
**BE CH DE ES FR GB IT LI NL SE**

(56) Entgegenhaltungen:
**GB-A- 1 535 548**

**PATENT ABSTRACTS OF JAPAN vol. 2, no. 8 (C) 20 Januar 1978; & JP-A-52 112630**

**PATENT ABSTRACTS OF JAPAN vol. 1, no. 53 () 23 Mai; & JP-A-52 8034**

(73) Patentinhaber: **Vianova Kunstharz Aktiengesellschaft**
**Bundesstrasse 175**
**A-8402 Werndorf(AT)**

(72) Erfinder: **Rauch-Puntigam, Harald, Dr.**
**Hochsteingasse 21**
**A-8010 Graz(AT)**
Erfinder: **Staritzbichler, Werner, Dr.**
**Im Hoffled 6**
**A-8046 Graz(AT)**
Erfinder: **Morre, Peter**
**Triesterstrasse 125**
**A-8073 Feldkirchen(AT)**

EP 0 362 643 B1

## Beschreibung

Die Erfindung betrifft die Verwendung von Hydroxylgruppen und Fluor enthaltenden Acrylatcopolymerisaten als Additive für wäßrige anionische Lacksysteme zur Verhinderung von Oberflächenstörungen.

Bekanntlich zeigen wäßrige Systeme bei der Filmbildung eine erhöhte Empfindlichkeit gegenüber Fremdstoffen im Lackmaterial oder auf dem zu lackierenden Substrat, die sich in Form von Kratern, Dellen oder ähnlichen Oberflächenstörungen äußert. Diese Empfindlichkeit kann bei Grundierungen durch Erhöhung des Pigmentanteils vermieden oder zumindest verringert werden. Dieser Weg ist jedoch in vielen Fällen, insbesonders bei dekorativen Lackierungen nicht gangbar, da er zu einer Verminderung der Beständigkeitseigenschaften bzw. zu Einbußen bei den optischen Eigenschaften führt.

Eine Herabsetzung der Empfindlichkeit dieser Systeme gegen Oberflächenstörungen kann auch durch Zusatz von grenzflächenaktiven Substanzen erfolgen. Häufig tritt dabei wegen einer zu großen Unverträglichkeit der Additive mit dem Lackmaterial eine zu starke Anreicherung der Additive im Bereich der Lackoberfläche ein, wodurch die Zwischenschichthaftung, d. h. die Haftung weiterer Lackschichten, wesentlich verschlechtert wird.

Zur Vermeidung einer extremen Unverträglichkeit werden in der gegenwärtigen Praxis bei Lacken auf der Basis von Carboxylatgruppen aufweisenden wasserlöslichen Lackbindemitteln polymere Zusatzmittel eingesetzt, die Copolymere von sauren Monomeren und neutralen Estermonomeren, hauptsächlich von (Meth)acrylmonomeren, darstellen. Durch eine entsprechende Abstimmung des Säureanteils kann eine optimale Systemwirksamkeit erreicht werden, doch besteht auch in diesem Fall eine große Empfindlichkeit gegenüber Überdosierung, die unmittelbar zu den beschriebenen Haftungsschwierigkeiten führt. Abgesehen davon werden bei der Notwendigkeit höherer Säureanteile, Eigenschaften der Lacke bzw. der Lackbindemittel, wie die Hydrophilie, die Verdünnbarkeit, das Viskositätsverhalten oder die Verträglichkeit, in unerwünschter Weise verändert.

Es ist bekannt, fluorhältige monomere Verbindungen bei der Herstellung von wäßrigen Polymerdispersionen einzusetzen, die vor allem in der Textilindustrie Verwendung finden.

So werden gemäß der DE-OS-35 33 807 wäßrige pastöse Überzugsmittel für Textilien auf der Basis von Hexafluoropropylen-Tetrafluorethylen-Vinylidenfluorid-Copolymeren beschrieben, wobei ein nicht vernetztes (Meth)-acrylsäurecopolymer-Ammoniumsalz als Verdickungsmittel dient.

In der DE-OS-34 03 880 werden zur Beschichtung von Textilien Fluoralkylgruppen tragende Polyacrylatdispersionen angeführt. 2-Perfluoralkylethylester der Acrylsäure werden mit anderen Acrylmonomeren unter Verwendung von speziellen Emulgatoren polymerisiert.

Die meisten aus der Literatur bekannten Fluor enthaltenden Überzugsmittel sind Dispersionen von Tetrafluorethylenpolymeren, wobei spezielle Emulgatoren oder besondere filmbildende Zusätze eingesetzt werden (siehe z. B. JP 48/17545 A, DE-OS-28 37 107, EP 173 071 A2 oder EP 193 963A2).

Es wurde nun gefunden, daß bei Lacksystemen, die als Bindemittel Carboxylgruppen tragende und durch Salzbildung mit Basen in eine wasserverdünnbare Form übergeführte Harze enthalten, die obengenannten Oberflächenstörungen und Haftungsschwierigkeiten überwunden werden können, wenn die als Additiv eingesetzten Acrylatcopolymerisate neben den Säuregruppen in ausgewählter Menge aus (Meth)-acrylsäurehydroxyethyl- bzw. (Meth)acrylsäurehydroxypropylestern stammende Hydroxylgruppen und Fluor enthaltende Ester der (Meth)acrylsäure aufweisen.

Die vorliegende Erfindung betrifft demgemäß die Verwendung von Hydroxylgruppen und Fluor enthaltenden Acrylatcopolymerisaten, welche aus

(A) 5 bis 15 Gew.-% (Meth)acrylsäure und/oder Maleinsäure und/oder deren Halbester mit Alkanolen, welche 1 bis 14 C-Atome aufweisen,
(B) 5 bis 50 Gew.-% (Meth)acrylsäurehydroxyethylester und/oder (Meth)acrylsäurehydroxypropylester,
(C)15 bis 89,5 Gew.-% (Meth)acrylsäurealkylester, deren Alkylreste 1 bis 12 C-Atome aufweisen,
(D)0,5 bis 10 Gew.-% eines 2 - Perfluoralkylethylesters der (Meth)acrylsäure, und gegebenenfalls
(E)bis zu 10 Gew.-% Styrol

bestehen, wobei die Summe der Prozentzahlen der Komponenten (A) bis (E) 100 ergeben muß, und welche eine Säurezahl von 15 bis 170 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren Carboxylgruppen mindestens zu 50 % mit einer organischen Base, vorzugsweise mit einem sekundären oder tertiären Alkylamin oder Alkanolamin, dessen Alkyl- oder Alkanolreste 1 bis 3 C-Atome aufweisen, neutralisiert sind, als Additive für wäßrige anionische Lacksysteme zur Verhinderung von Oberflächenstörungen.

Durch die erfindungsgemäßen Additive werden sowohl Filmstörungen, die durch die Oberflächenspannung der wäßrigen Phase im Lack bedingt sind, als auch die Probleme bei der Zwischenschichthaftung, d.h. bei der Haftung weiterer Lackschichten, durch eine andere Verteilung und Wirksamkeit der hydrophilen Gruppen wesentlich vermindert.

Die Acrylatcopolymerisate mit der im Patentanspruch angegebenen Zusammensetzung und Charakteristik werden in üblicher Weise durch Lösungspolymerisation in wassermischbaren oder mindestens wassertoleranten Lösemitteln, wie niedrigen Alkoholen, vorzugsweise Butanol oder Glykolmono- oder -diethern, hergestellt. Es können auch Gemische dieser Lösemittel, z. B. Butanol mit Methoxypropanol, verwendet werden.

Die Acrylatcopolymerisate werden durch folgende Kennwerte charakterisiert:

Säurezahl:        15 bis 170 mg KOH/g, vorzugsweise 30 bis 120 mg KOH/g,

Hydroxylzahl:     15 bis 250 mg KOH/g, vorzugsweise 20 bis 200 mg KOH/mg.

Als fluorhaltige Monomere werden vor allem die 2-Perfluoralkylethylester der (Meth)acrylsäure eingesetzt.

Diese Verbindungen der allgemeinen Formel $C_n F_{2n+1} (CH_2)_2 OOC - CR = CH_2$, wobei n = 4 - 14 und R ein Wasserstoffatom oder eine Methylgruppe bedeutet, liegen als (Meth)acrylsäureester, z. B. in der handelsüblichen Form, als Gemisch vor, welches zu mehr als 50 % das 2-(Perfluoroctyl)-ethyl(meth)acrylat (entsprechend dem (Meth)acrylsäureheptadecafluordecylester, n = 8) enthält.

Die Carboxylgruppen der Acrylatcopolymerisate werden mindestens zu 50 % mit einer organischen Base neutralisiert. Vorzugsweise erfolgt die Neutralisation mit sekundären oder tertiären Alkyl- oder Alkanolaminen, deren Alkyl- bzw. Alkanolreste 1 bis 3 C-Atome aufweisen. Beispiele für solche Neutralisationsmittel sind Diethylamin, Triethylamin, Di-n-Propylamin, Dimethylethanolamin, Diisopropanolamin u ä.

Die Acrylatcopolymerisate werden gleichzeitig mit der Zugabe des Neutralisationsmittels oder nach der Neutralisation mit Wasser auf den für die Anwendung vorteilhaften Festkörpergehalt verdünnt. Üblicherweise erfolgt der Einsatz als 50 ± 15 %ige Lösung.

Die erfindungsgemäßen Additive werden in einer Menge von 0,1 bis 2,0 Gew.-%, vorzugsweise von 0,3 bis 1,0 Gew.-%, berechnet auf Feststoff und bezogen auf den Feststoffanteil des Bindemittels im Lack, eingesetzt.

Die erfindungsgemäßen Additive werden für alle Typen von Lacken, die mit anionischen, wasserverdünnbaren, auch als "wasserlöslich" bezeichneten, Bindemitteln formuliert werden, verwendet. Diese Bindemittel können Kondensationsharze vom Polyester- oder Alkydharztyp, Copolymerisate aus alpha, beta-ungesättigten Monomeren oder Additionsharze, wie modifizierte Epoxidharzester, sein. Sie tragen üblicherweise eine ausreichende Zahl von Carboxylgruppen, durch deren Neutralisation mit Basen das Bindemittel in die wasserverdünnbare Form übergeführt wird.

Die Prüfung der erfindungsgemäßen Additive erfolgt vorteilhaft durch Einmischen geringer Mengen einer störenden Substanz in den verarbeitungsfertigen Klarlack des Bindemittels. Als für diesen Test besonders gut geeignet haben sich styrol- bzw. vinyltoluolmodifizierte Alkydharze, gelöst in Lackbenzin und anderen organischen Lösemitteln, erwiesen. Der verunreinigte Klarlack wird auf entfettetes Stahlblech gespritzt und unter den für das Bindemittel erforderlichen Bedingungen gehärtet. Die Prüfung der Zwischenschichthaftung erfolgt zweckmäßig nach Überspritzen des gehärteten Testfilms mit einem Einbrennlack, der auch in organischen Lösemitteln vorliegen kann, und einer Gitterschnittprüfung nach Aushärtung und gegebenenfalls Korrosionsbelastung des Films.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiele 1 - 3

Herstellung der Additive

Beispiel 1:

| 18,0 Tle<br>18,0 Tle | n-Butanol<br>Methoxypropanol | Teil I |
|---|---|---|
| 57,0 Tle<br>30,0 Tle<br>10,0 Tle<br>3,0 Tle | Methacrylsäurebutylester<br>Acrylsäure-2-hydroxy-ethylester<br>Acrylsäure<br>Acrylsäureheptadecafluordecylester | Teil II |
| 1,0 Tl<br>6,5 Tle<br>6,5 Tle | Di-tert.-butylperoxid<br>n-Butanol<br>Methoxypropanol | Teil III |
| 12,0 Tle | Dimethylethanolamin<br>Wasser | Teil IV<br>Teil V |

Teil I wird in das Reaktionsgefäß gefüllt und auf 115°C erhitzt. Teil II und Teil III werden innerhalb von 5 Stunden bei 115 - 120°C gleichmäßig in den Reaktor gelassen. Nach Beendigung der Zugaben wird 2 Stunden bei 120°C gehalten und das Polymerisationsende durch Festkörperbestimmung kontrolliert.

Nach Erreichen des theoretischen Festkörpers wird bei 40°C Teil IV zugesetzt (der pH-Wert einer 5%igen wässerigen Prüflösung beträgt 10,8).

Nach Erreichen des Normwertes wird mit Teil V der Festkörper auf 50 % eingestellt.

Beispiel 2:

| 18,0 Tle<br>18,0 Tle | n-Butanol<br>Methoxypropanol | Teil I |
|---|---|---|
| 57,0 Tle<br>30,0 Tle<br>10,0 Tle<br>3,0 Tle | Acrylsäurebutylester<br>Acrylsäure-2-hydroxy-ethylester<br>Acrylsäure<br>Methacrylsäureheptadecafluordecylester | Teil II |
| 1,0 Tl<br>6,5 Tle<br>6,5 Tle | Di-tert.-butylperoxid<br>n-Butanol<br>Methoxypropanol | Teil III |
| 12,0 Tle | Triethylamin<br>Wasser | Teil IV<br>Teil V |

Reaktionsführung, pH-Wert und Festkörper wie in Beispiel 1.

Beispiel 3:

| 18,0 Tle | n-Butanol | Teil I |
| 18,0 Tle | Methoxypropanol | |
| 3,0 Tle | Styrol | Teil II |
| 57,0 Tle | Acrylsäurebutylester | |
| 25,0 Tle | Methacrylsäure-2-hydroxy-ethylester | |
| 10,0 Tle | Methacrylsäure | |
| 5,0 Tle | Acrylsäureheptadecafluordecylester | |
| 1,0 Tl | Di-tert.-butylperoxid | Teil III |
| 6,5 Tle | n-Butanol | |
| 6,5 Tle | Methoxypropanol | |
| 12,0 Tle | Dimethylethanolamin | Teil IV |
| | Wasser | Teil V |

Reaktionsführung analog Beispiel 1; nach Zugabe von Teil IV beträgt der pH-Wert einer 5%igen wäßrigen Lösung 10,0.

Der Endfestkörper wird wieder mit Wasser (Teil V) auf 50 % eingestellt.

Vergleichsbeispiel 1 (V1):

| 18,0 Tle | n-Butanol | Teil I |
| 18,0 Tle | Methoxypropanol | |
| 82,0 Tle | Acrylsäurebutylester | Teil II |
| 18,0 Tle | Acrylsäure | |
| 1,0 Tl | Di-tert.-butylperoxid | Teil III |
| 6,5 Tle | n-Butanol | |
| 6,5 Tle | Methoxypropanol | |
| 15,0 Tle | Triethylamin | Teil IV |
| 30,0 Tle | Wasser | Teil V |
| 15,0 Tle | Triethylamin | Teil VI |

Die Durchführung der Polymerisation erfolgt wie in Beispiel 1. Nach der Teilneutralisation bei 40 °C mit Teil IV wird zunächst Teil V zugegeben und dann mit Teil VI ein pH-Wert von 8,5 eingestellt.

Prüfung der erfindungsgemäßen Additive

(a) Herstellung der Testlösung I

Ein handelsübliches wasserverdünnbares Lackbindemittel auf Basis eines gesättigten Polyesters wird, gegebenenfalls nach Neutralisation und Zugabe eines Melaminharzes als Vernetzungskomponente gemäß Merkblatt, auf einen Festkörpergehalt von 25 % mit deionisiertem Wasser verdünnt und mit einer 10%igen Lösung eines handelsüblichen hochstyrolisierten Alkydharzes versetzt.

Beispielsweise kann folgende Rezeptur verwendet werden:

| 120 Tle | RESYDROL VWA 11, 70 % |
|---|---|
| 6 Tle | Dimethylethanolamin (DMEA) |
| 50 Tle | Monoethylenglykolmonobutylether (BUGL) |
| 17 Tle | Hexamethoxymethylmelamin (HMMM) |
| 208 Tle | Wasser |
| 5 Tle | VIALKYD AV 462 / 60%ig in Testbenzin, verdünnt mit BUGL/Xylol(1:1) auf einen Festkörpergehalt von 10 %. |

Die Lösung hat eine Auslaufzeit nach DIN 53211/20°C von 30 - 40 Sekunden. (RESYDROL und VIALKYD sind registrierte Warennamen der VIANOVA KUNSTHARZ AG).

(b) Herstellung der Testlösung II

Ein handelsübliches wasserverdünnbares kurzöliges Alkydharz wird, gegebenenfalls nach Neutralisation und Zugabe eines Melaminharzes als Vernetzungskomponente gemäß Merkblatt, auf einen Festkörpergehalt von 25 % mit deionisiertem Wasser verdünnt und mit einer 10%igen Lösung eines handelsüblichen hochstyrolisierten Alkydharzes versetzt.

Beispielsweise kann folgende Rezeptur verwendet werden:

| 120 Tle | RESYDROL VWA 5400, 70 % |
|---|---|
| 6 Tle | DMEA |
| 50 Tle | BUGL |
| 17 Tle | HMMM |
| 243 Tle | Wasser |
| 5 Tle | VIALKYD AV 462 / 60%ig in Testbenzin, verdünnt mit BUGL/Xylol(1:1) auf einen Festkörpergehalt von 10 %. |

Die Lösung hat eine Auslaufzeit nach DIN 53211/20°C von 30 - 40 Sekunden.

(c) Prüfung der erfindungsgemäßen Additive auf Oberflächenstörungen und auf die Haftung weiterer Lackschichten

Die in der nachfolgenden Tabelle 1 angegebenen Mischungen werden auf entfettete Stahlbleche aufgespritzt und 30 Minuten bei 160°C gehärtet. Die resultierende Trockenfilmstärke soll 35 ± 5 $\mu$m betragen.

Die Filmfläche wird in Bezug auf die Krater- bzw. Dellenbildung beurteilt (0 : keine Krater, 1 : einzelne Krater; 2 : deutliche Kraterneigung, 3 : starke Kraterbildung).

Auf den Film der gehärteten Testlösungen wird ein praxisgerechter, ofentrocknender Industrielack, z.B. auf Basis eines in organischen Lösemitteln vorliegenden fremdvernetzenden Acrylatharzes (75 Teile Festharz), eines Melaminharzes (25 Teile Festharz) und 80 Teilen Titandioxyd vom Rutil-Typ, aufgebracht und eingebrannt.

Nach 2-stündiger Lagerung im Normklima wird die Zwischenschichthaftung durch eine Gitterschnittprüfung nach DIN 53 151 geprüft. Eine weitere Gitterschnittprüfung erfolgt nach einem Tropentest (240 Stunden, 40°C, 100 % rel. Luftfeuchtigkeit) und nach anschließender 2-stündiger Lagerung im Normklima. Beurteilt wurde die Haftung des Decklackes auf dem Klarlack.

Tabelle 1:

Testmischungen und Prüfergebnisse.

Als Klarlack werden 405 g der Testlösung I bzw. 441 g der Testlösung II (jeweils 100 g Festharz) mit der angegebenen Menge Additiv gemischt (Gew.-%, berechnet auf Feststoff des Additivs und bezogen auf den Feststoffanteil des Bindemittels in den Testlösungen I und II).

| Testlösung | Additiv gemäß Beisp. | Gew.-% | Kraterbildung Note | Gitterschnittwerte Gt | |
|---|---|---|---|---|---|
| | | | | nach 2 h Normklima | nach 240 h Tropentest |
| I | · | ohne Additiv | 3 | 0 | 1 |
| I | 1 | 0,8 | 0 | 0 | 0 |
| I | 2 | 1 | 0 | 0 | 0 |
| I | 3 | 0,3 | 0 | 0 | 1 |
| I | (V1) | 0,5 | 0 | 1–2 | 5 |
| II | | ohne Additiv | 2–3 | 0 | 1 |
| II | 1 | 0,8 | 0 | 0 | 0 |
| II | 2 | 1 | 0 | 0 | 0 |
| II | 3 | 0,3 | 0 | 0 | 1 |
| II | (V1) | 0,5 | 0 | 1 | 4 |

**Patentansprüche**

1.  Verwendung von Hydroxylgruppen und Fluor enthaltenden Acrylatcopolymerisaten, welche aus

7

(A) 5 bis 15 Gew.-% (Meth)acrylsäure und/oder Maleinsäure und/oder deren Halbester mit Alkanolen, welche 1 bis 14 C-Atome aufweisen,
(B) 5 bis 50 Gew.-% (Meth)acrylsäurehydroxyethylester und/oder (Meth)-acrylsäurehydroxypropylester,
(C) 15 bis 89,5 Gew.-% (Meth)acrylsäurealkylester , deren Alkylreste 1 bis 12 C-Atome aufweisen,
(D)0,5 bis 10 Gew.-% eines 2 -Perfluoralkylethylesters der (Meth)acrylsäure, und gegebenenfalls
(E)bis zu 10 Gew.-% Styrol
bestehen, wobei die Summe der Prozentzahlen der Komponenten (A) bis (E) 100 ergeben muß, und welche eine Säurezahl von 15 bis 170 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren Carboxylgruppen mindestens zu 50 % mit einer organischen Base, vorzugsweise mit einem sekundären oder tertiären Alkylamin oder Alkanolamin, dessen Alkyl- oder Alkanolreste 1 bis 3 C-Atome aufweisen, neutralisiert sind, als Additive für wäßrige anionische Lacksysteme zur Verhinderung von Oberflächenstörungen.

**2.** Verwendung von Acrylatcopolymerisaten nach Anspruch 1 in einer Menge von 0,1 bis 2,0 Gew.-%, vorzugsweise von 0,3 bis 1,0 Gew.-%, berechnet auf Feststoff und bezogen auf den Feststoffanteil des Bindemittels im Lack, für den in Anspruch 1 angegebenen Zweck.

## Claims

**1.** Use of acrylate copolymers containing hydroxyl groups and fluorine which consist of
(A) 5 to 15% by weight of (meth)acrylic acid and/or maleic acid and/or its semiesters with alkanols having 1 to 14 carbon atoms,
(B) 5 to 50% by weight of hydroxyethyl (meth)acrylate and/or hydroxypropyl (meth)acrylate,
(C) 15 to 89.5% by weight of alkyl (meth)acrylates whose alkyl radicals have 1 to 12 carbon atoms,
(D) 0.5 to 10% by weight of a 2-perfluoroalkylethyl (meth)acrylate, and, if desired,
(E) up to 10% by weight of styrene,
the percentages of the components (A) to (E) having to add up to 100, which copolymers have an acid value of 15 to 170 mg of KOH/g, preferably 30 to 120 mg of KOH/g, and a hydroxyl value of 15 to 250 mg of KOH/g, preferably 20 to 200 mg of KOH/g, and the carboxyl groups of which are neutralized to at least 50% with an organic base, preferably a secondary or tertiary alkylamine or alkanolamine whose alkyl or alkanol radicals have 1 to 3 carbon atoms, as additives for aqueous anionic paint systems for the purpose of preventing surface defects.

**2.** Use of acrylate copolymers according to Claim 1 in amounts from 0.1 to 2.0% by weight, preferably from 0.3 to 1.0% by weight, calculated on the solids and based on the solids content of the binder in the paint, for the purpose stated in Claim 1.

## Revendications

**1.** Utilisation de copolymères acryliques contenant des groupes hydroxyles et du fluor en tant qu'additifs pour des systèmes de peintures anioniques aqueux pour empêcher les défauts de surface, qui sont constitués par
A) 5 à 15% en poids d'acide (méth)acrylique et/ou d'acide maléique et/ou de leurs semi-esters avec des alcanols comportant 1 à 14 atomes de C,
B) 5 à 50% en poids de (méth)acrylate d'hydroxyéthyle et/ou de (méth)acrylate d'hydroxypropyle,
C) 15 à 89,5% en poids de (méth)acrylates d'alkyles dont les restes alkyles comportent 1 à 12 atomes de C,
D) 0,5 à 10% en poids d'un ester 2-perfluoralkyléthylique de l'acide (méth)acrylique et éventuellement
E) jusqu'à 10% en poids de styrène, la somme des pourcentages des composants A) à E) devant donner 100, et oui possèdent un indice d'acide de 15 à 170 mg de KOH/g, de préférence de 30 à 120 mg de KOH/g et un indice d'hydroxyle de 15 à 250 mg de KOH/g, de préférence de 20 à 200 mg de KOH/g et dont les groupes carboxyles sont neutralisés à au moins 50% avec une base organique, de préférence avec une alkylamine ou une alcanolamine secondaire ou tertiaire dont les restes alkyles ou alcanols comportent 1 à 3 atomes de C.

2. Utilisation de copolymères acryliques selon la revendication 1 en une quantité de 0,1 à 2,0% en poids, de préférence de 0,3 à 1,0% en poids, calculés sur les matières solides et rapportés à la fraction de matières solides du liant dans la peinture, pour l'usage indiqué dans la revendication 1.